# EUROPEAN PATENT APPLICATION

(11) **EP 0 671 130 A1**
(43) Date of publication of application: **13.09.1995**
(21) Application number: 95102390.2
(22) Date of filing: 21.02.1995
(51) Int. Cl.: A23L 3/36

(54) **Apparatus for freezing or deep-freezing food products**

(30) Priority: 09.03.1994 IT PN940013
(71) Applicant: ALFAGEL S.p.A., I-31053 Pieve di Soligo, Treviso (IT)
(72) Inventor: Da Dalto, Leone, I-31020 San Pietro di Feletto, Treviso (IT); Ricci, Luca, I-31058 Susegana, Treviso (IT)
(74) Representative: Giugni, Valter

(57) **Abstract**

Apparatus for freezing or deep-freezing food products, in particular such products consisting of at least a basic ingredient in the form of individual unitary pieces, and at least an additional ingredient, such as a condiment or the like.

The apparatus comprises a mixing and deep-freezing chamber formed by a flexible bag (13) mounted on a support framework (14) and moved alternately in a vertical direction by a motor-driven mechanism (15-19) connected to said framework.

The solution is particularly simple from both a construction and an operation point of view.

## Description

The present invention refers to a new apparatus for freezing or deep-freezing food products, in particular such products consisting of at least a basic ingredient in the form of individual unitary pieces, and at least an additional ingredient, such as a condiment or the like, containing a relatively high percentage of water (in excess of 40%).

The Italian patent application no. PN93A000043, filed on June 18, 1993 by the same applicant discloses a food product of the above cited type, as well as a method for the production thereof. Such a patent application covers in particular the production of pasta-based meals, with a sauce being added thereto for flavouring, which are then frozen or deep-frozen so as to provide a final product formed by individual unitary pieces, in which sauce granules are attached to the surface of the individual pieces of pasta. Both pasta and sauce are prepared and cooked separately with traditional methods and are then frozen either simultaneously or in successive steps. At the time of serving, ie. after defrosting, both pasta and flavouring sauce appear to be intimately blended with each other and immediately ready for consumption.

Apparatuses for freezing or deep-freezing food products are known since a long time. The main drawbacks associable to such known freezing or deep-freezing apparatuses are due to the manner in which the ingredients are stirred or mixed, since this is done by mechanical means (screw or flight-type shaft rotating inside a rigid vessel) that tend to treat the product in such a rough manner that quite frequently they spoil its integrity. Furthermore, such mixing means must be provided with scraping means to remove from the walls of the vessel all ice incrustations that inevitably form or build up on the same walls.

The patent specification EP-A-0093506 discloses a method and an apparatus of the cited kind. The therein described solution enables a pre-cooked food to be added to a dry and/or powdered substance so as to obtain a single mass of frozen or deep-frozen product which, after defrosting, is able to maintain the original proportions of the ingredients. Such a solution is therefore not limited to the production of individual portions. On the other hand, the frozen product, given its solid and dense mass, requires a considerable amount of both time and heat in order to obtain a product which is ready to be served and eaten.

The patent specification EP-A-0188359 discloses another method and apparatus of the same kind as described in the afore cited patent and, therefore, with basically the same drawbacks.

The patent specification LU 81065 discloses a method for freezing food products made up by vegetables, rice or pasta, in which additional ingredients, such as potato flakes or powdered herbs, are not allowed to contain more than 40% of water. As a result, even this method has definite limitations concerning the products which can be obtained on the basis of the raw materials used.

The patent specification FR 2463585 describes a method for freezing liquid food products, in which liquids are frozen to blocks and are then broken into pieces of various shape and form, such as granules, spheres, crystals and the like.

Finally, the patent specification US 3,607,313 describes a method for quick-freezing food products on which a favouring sauce is sprayed. Single pieces of product, such as green peas, are obtained with such a method, which are entirely coated with sauce and frozen in a mixing drum.

As a result, from the current state of the art solutions such as the afore discussed ones are emerging which appear to have clear limitations concerning the type of products that can be processed therewith and/or to require the use of devices which are rather complicated and, above all, not capable of handling the products with the due care in view of obtaining frozen food products in single pieces, on the surface of which the additional ingredients, also frozen, may be able to adhere substantially in the form of granules.

It would therefore be desirable, and it is actually a main purpose of the present invention, to provide an apparatus for freezing or deep-freezing food products, which is substantially simpler in its construction and is able to handle the products much more gently, while in all cases ensuring a better effectiveness in mixing the same products.

The present invention, so as it is defined in the appended claim 1, therefore calls for the mixing and deep-freezing chamber to be formed by a bag or similar vessel of a flexible material, which is mounted on a support framework and which submitted to agitation and deformation by means of working means of a preferably electro-mechanical type, in such a manner that the product to be frozen undergoes continuous mixing and is caused to progress from the feeding zone down to the unloading zone.

Further purposes and features of the present invention will become apparent from the following description which is given by way of non-limiting example with reference to the accompanying drawings, in which:

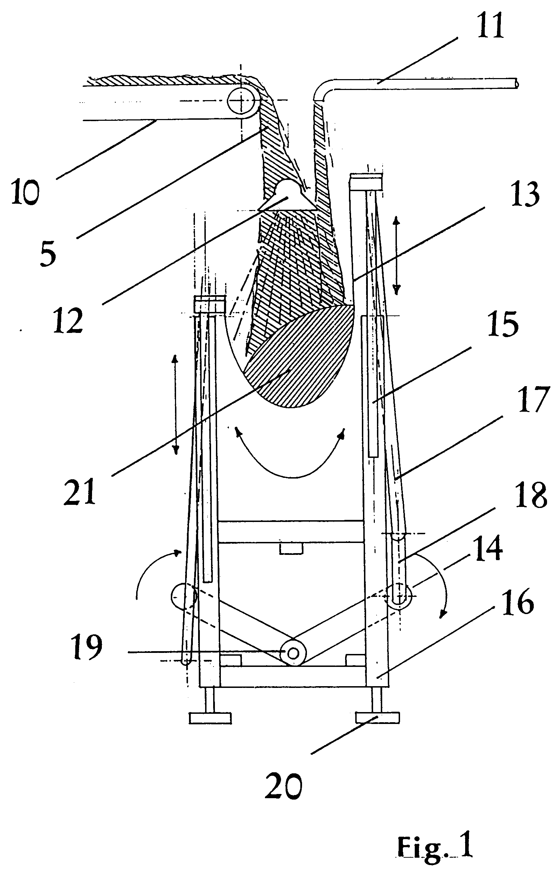

- Figure 1 is a schematic, cross-sectional view of an apparatus according to the present invention; and
- Figure 2 is a schematic, partial side view of the apparatus shown in Figure 1.

The apparatus according to the present invention substantially comprises feeding means for the basic product 5 (such as for instance edible pasta cooked in a traditional manner), said feeding means being usually formed by a motor-driven conveyor belt 10, feeding means for at least an additional ingredient 6 (such as for instance flavouring sauce prepared in any traditional way), said feeding means being usually formed by a simple pipe 11 connected to the vessel (not shown) containing said ingredient, as well as feeding means for a cryogenic medium (such as for instance carbon dioxide), said feeding means being formed by one or several bell-like containers 12 with medium ejecting nozzles.

The main feature of the present invention is the vessel acting as the mixing and deep-freezing chamber 13, said vessel being formed by a bag of a flexible material suitable for holding food products (such as for instance polypropylene) and being mounted on a support framework 14 so as to be able to be alternately moved in a vertical direction by means of a motor-driven mechanism that will be described farther on.

Said bag-like vessel 13 has its upper edges attached to the end portions of a plurality of vertical bars 15 which are slidably inserted in respective hollow upright elements 16 of the support framework 14. Each bar 15 is pivotally hinged at the upper end portion of a connecting rod 17, and all connecting rods 17 are connected, through respective crank mechanisms 18, to a common driving shaft 19 which is rotated by a motor (not shown).

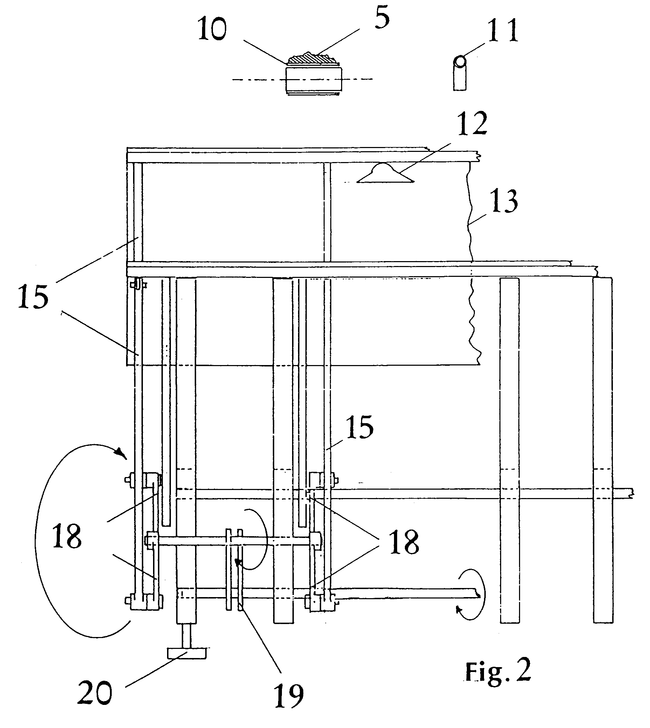

The support framework 14 is mounted on feet 20 which are preferably of the hydraulic-jack type in view of the possibility of adjusting the inclination of the same framework, so as to promote the displacement of the product 21 along the bag-like vessel 13 from the feeding zone, which is arranged at one of the end portions of the apparatus (for instance, on the left side in Figure 2), toward the unloading zone at the opposite end portion.

The whole apparatus is of course enclosed in a housing (not shown) so as to ensure the required tightness and process hygienics. Furthermore, the apparatus shall also be provided with actuation and control means that are not described here, since it is assumed that they are largely known to anyone skilled in the art.

The operation of the apparatus is simple and readily understood. The cooked pasta 5 is fed by the conveyor belt 10 to the feeding end portion of the apparatus, from where it falls into the bag-like vessel 13 in which it comes together with both the cryogenic medium flowing in from the bells 12 and the flavouring sauce admitted through the pipe 11. The bag-like vessel 13 is kept constantly moving by the motor-driven mechanism 15-19 and, as a consequence, keeps changing its shape constantly, thereby causing the product to be frozen to be continuously mixed and preventing ice incrustations from forming or building up on the walls of the bag-like vessel.

The continuous movement of the bag-like vessel causes the product to be displaced upwards as long as the inner cohesive force of the product is higher than the force of gravity that acts on the same product. When the force of gravity then exceeds the inner cohesive force of the product, the latter starts sliding down on itself and along the walls of the bag-like vessel, thereby causing the pasta, the sauce and the carbon dioxide to get thoroughly mixed together.

The inclination of the support framework 14, which is obtained by correspondingly adjusting the feet 20, makes it possible for the product to progress from the feeding zone towards the unloading zone while it is being mixed in the bag-like vessel in the afore illustrated manner.

The characteristics and the advantages of the apparatus according to the present invention can therefore be summarized as follows: simple construction, gentle handling of the product under perfect mixing thereof, elimination of ice build-ups in the deep-freezing chamber.

It will of course be appreciated that the above described apparatus may be the subject of any addition or modification considered to be appropriate, without departing from the scope of the present invention. For instance, the number, the type and the arrangement of the feeding means for the basic ingredient, the additional ingredient and/or the cryogenic medium may differ from the afore described ones. Even the means used to impart the movement to the bag-like vessel 13 may be different, as long as the above described operating principle remains unaltered.

Furthermore, the bag-like vessel 13 may be replaced by a sealed tubular conduit which may be supported by or suspended in the framework 14 so as to be continuously agitated and deformed by working means similar to those referenced with the numerals 15-19 in the previously described embodiment. Such an alternative solution may make it possible to do away with the casing or housing used to enclose the whole apparatus. It will of course be appreciated that said tubular conduit shall be provided with appropriate openings to which the feeding conduits for both the products to be frozen or deep-frozen and the media required to perform such a process must be connected in a water and air tight manner.

## Claims

1. Apparatus for freezing or deep-freezing food products, comprising substantially a mixing and deep-freezing chamber (13), means (10, 11) for feeding the food products (5, 6) into said chamber, and means (12) for freezing or deep-freezing said food products, **characterized in that** said mixing and deep-freezing chamber is formed by a bag (13) or similar vessel of a flexible material, which is mounted on a support framework (14) and which is submitted to agitation and deformation by means of working means (15-19) of a preferably electro-mechanical type, in such a manner that the product to be frozen undergoes continuous mixing and is caused to progress from a feeding zone toward an unloading zone of the apparatus.

2. Apparatus according to claim 1, **characterized in that** said chamber (13) is open at the top and its upper edges are attached to said framework (14), said working means (15-19) being arranged to move the edges of the chamber alternately in a vertical direction.

3. Apparatus according to claim 1 or 2, **characterized in that** said bag (13) is made of a plastic material, such as polypropylene, that is suitable for use with food products.

4. Apparatus according to any of the preceding claims, **characterized in that** the upper edges of the bag (13) are attached to the upper end portion of a plurality of vertical bars (15) capable of sliding in respective hollow upright elements (16) of the framework (14), each one of said bars being connected through a crank and connecting-rod mechanism (17, 18) to a common shaft (19) which is rotatably driven by a motor.

5. Apparatus according to any of the preceding claims, **characterized in that** it comprises means to cause the food product to progress from the feeding zone to the unloading zone of the apparatus, said means being formed by hydraulic-jack type feet (20) that can be adjusted to impart an appropriate inclination to said framework (14).

6. Apparatus according to claim 1, wherein said bag (13) is made in the form of a sealed tubular conduit provided with appropriate openings for connecting both the feeding conduits for the products to be frozen (5-6) and the working means (15-19) in a water and air tight manner thereto.
